## Europäisches Patentamt
## European Patent Office
## Office européen des brevets

(19)

(11) Numéro de publication: **0 056 463**
**A2**

(12) **DEMANDE DE BREVET EUROPEEN**

(21) Numéro de dépôt: **81110407.4**

(22) Date de dépôt: **14.12.81**

(51) Int. Cl.³: **B 01 F 15/04**
**B 01 F 3/02, G 05 D 11/03**

(30) Priorité: **14.01.81 FR 8100700**

(43) Date de publication de la demande:
**28.07.82 Bulletin 82/30**

(84) Etats contractants désignés:
**BE DE GB IT LU NL SE**

(71) Demandeur: **LAMBIOTTE & CIE S.A.**
**Avenue Brugmann 290**
**B-1180 Bruxelles(BE)**

(72) Inventeur: **Martin, Joseph**
**Place du Levant 2**
**B-1348 Louvain la Neuve(BE)**

(74) Mandataire: **Micheli, Michel Pierre et al,**
**MICHELI & CIE 118, Rue du Rhône Case Postale 47**
**CH-1211 Geneve 6(CH)**

(54) **Dispositif mélangeur de gaz.**

(57) Le dispositif mélangeur de gaz comporte un équilibreur (I) présentant deux chambres étanches (5,6) séparées par une paroi mobile (7,8) reliées chacune à une tubulure d'admission (1,2) et une tubulure d'échappement (1',2').

Des soupapes sont montées dans les tubulures d'admission (1,2) et sont reliées mécaniquement entre elles et à la paroi mobile (7,8) de façon rigide.

Il comporte encore un doseur (II) présentant deux orifices calibrés (22, 23) alimentés chacun par des tubulures d'échappement (1',2') de l'équilibreur (I) et débouchant dans une tubulure mélangeuse commune (3).

FIG. 1

EP 0 056 463 A2

# Dispositif mélangeur de gaz

Il existe des appareils mélangeur pour gaz du type volumétrique tel que celui décrit dans le brevet FR-2.019.284 comportant un premier réducteur équilibrant les pressions des deux gaz devant être mélangés et alimentant un doseur volumétrique par l'intermédiaire d'une vanne à tiroir. Une fois les deux volumes réglables définissant le rapport du mélange de ces gaz remplis, le tiroir du distributeur est déplacé et ces deux volumes de gaz sont dirigés dans un réservoir récepteur de mélange par l'intermédiaire d'un second réducteur assurant que les deux gaz à mélanger soient à la même pression avant leur mélange.

Un tel dispositif est compliqué et nécessite un fonctionnement intermittent commandé par le tiroir du distributeur.

Il existe encore des appareils mélangeur de gaz tels que décrits dans le brevet DE-2.907.218 comprenant un équilibreur de pression des deux gaz à mélanger alimentant un mélangeur comportant un élément rotatif dont la position angulaire permet de modifier le rapport des deux gaz dans le mélange. Dans un tel appareil le taux du mélange de gaz n'est pas constant en fonction du débit total du mélange. Pour éviter cet inconvénient, il est nécessaire de prévoir un dispositif supplémentaire compliquant le mélangeur. De plus l'équilibreur comporte deux dispositifs à membrane.

Enfin le brevet US-3.233.987 décrit un mélangeur de gaz dans lequel le taux du mélange ainsi que son débit sont tous deux réglés de façon indépendante.

La présente invention a pour but de créer un dispositif mélangeur de gaz de construction extrêmement simple dans lequel une commande unique agit soit uniquement sur le débit du mélange de gaz, soit simultanément sur ce débit et sur le taux du mélange des gaz. Un autre but de la présente invention est de réaliser un mélangeur à haute fiabilité qui de ce fait doit comporter un minimum d'éléments mobiles.

Enfin l'utilisation principale du mélangeur selon l'invention étant son application à l'alimentation des moteurs à combustion interne, il faut qu'il fonctionne avec des débits pulsés aux fréquences de ces moteurs. Les dispositifs connus précités ne peuvent pas fonctionner correctement dans de telles conditions d'utilisation pour lesquelles ils ne sont d'ailleurs pas prévus.

La présente invention a pour objet un dispositif mélangeur de gaz permettant de délivrer à un collecteur d'utilisation un mélange de deux gaz ou de deux mélanges gazeux en proportions constantes quels que soient :

a. le débit du mélange utilisé.

b. les pressions d'alimentation des deux gaz ou mélanges gazeux.

c. la pression dans le collecteur d'utilisation, pour autant qu'elle soit inférieure à la plus faible des pressions d'alimentation des deux gaz ou mélanges gazeux.

Le dispositif mélangeur de gaz selon la présente invention se distingue par le fait qu'il comporte un équilibreur présentant deux chambres à volumes variables séparées de façon étanche par une paroi mobile, chacune de ces chambres étant munie d'un conduit d'alimentation et d'un conduit d'évacuation d'un fluide gazeux; par le fait que chaque conduit d'alimentation est muni d'une soupape; par le fait que les deux soupapes sont solidaires entre elles et avec la paroi mobile séparant les deux chambres; et par le fait qu'il comporte encore un doseur présentant deux orifices calibrés alimentés chacun par l'un des conduits d'échappement de l'équilibreur et alimentant une même tubulure mélangeuse.

Le dessin annexé illustre schématiquement et à titre d'exemple une forme d'exécution particulière du dispositif mélangeur de gaz selon la présente invention.

La figure 1 est un schéma de principe du dispositif mélangeur de gaz.

La figure 2 illustre en coupe une forme d'exécution de l'équilibreur du mélangeur de gaz.

La figure 3 illustre en coupe une forme d'exécution du doseur du dispositif mélangeur de gaz.

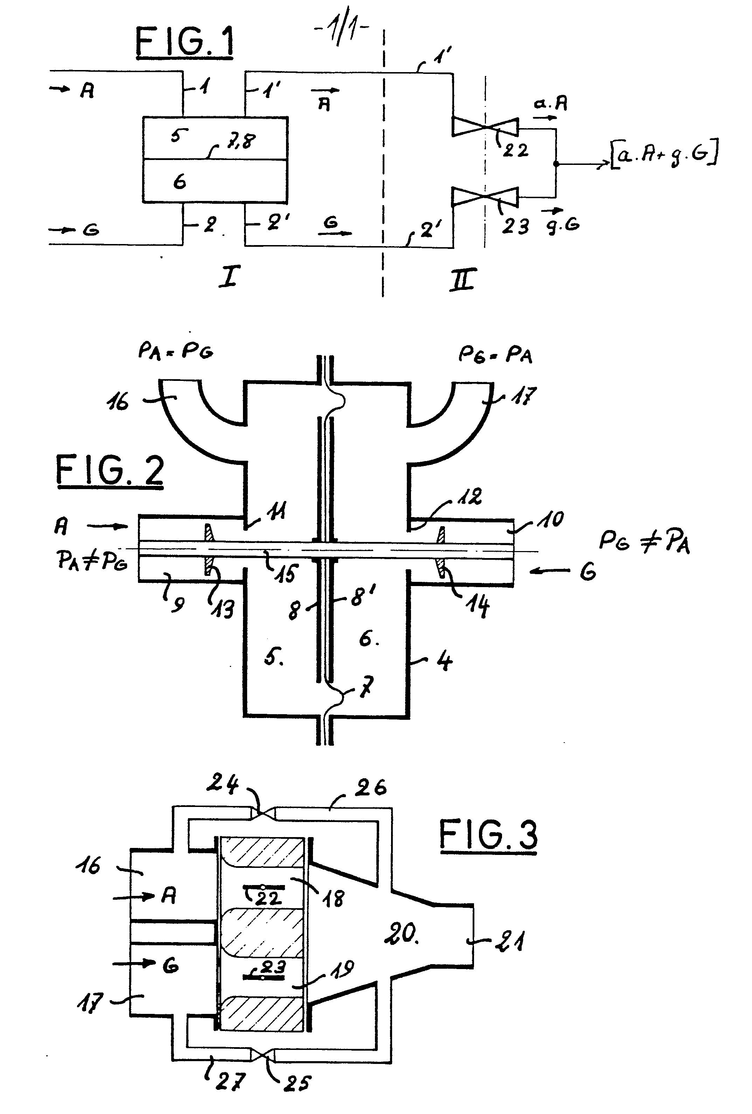

Le principe de fonctionnement du dispositif mélangeur de gaz, qui peut constituer un carburateur à gaz, est illustré par le schéma de la figure 1.

Le mélangeur de gaz comporte un premier sous-ensemble I constituant un équilibreur de pression. Ce premier sous-ensemble I reçoit par les tubulures d'admissions 1, 2 deux gaz ou mélanges gazeux devant être mélangés A et G sous des pressions quelconques PA et PG. La pression PA peut être plus grande, égale ou plus faible que la pression PG.

Ce premier sous-ensemble I restitue les gaz A et G séparément mais à des pressions égales P'A = P'G par des tubulures d'échappements 1', 2'. Cette pression d'échappement des gaz A et G (P'A = PàG) est égale à la pression d'alimentation (PA ou PG) la plus faible.

Le second sous-ensemble II reçoit par des tubulures distinctes les gaz A et G séparés mais à des pressions identiques et délivre à un collecteur commun 3, ou tubulure mélangeuse, le mélange a.A + g.G des deux gaz ou mélanges gazeux dans la proportion constante désirée $\frac{a}{g}$ .

Dans une forme d'exécution particulière illustrée à la figure 2 le premier sous-ensemble I est constitué par un équilibreur comportant une enceinte 4 séparée en deux chambres distinctes, étanches, 5, 6 par une paroi mobile. Cette paroi mobile est ici réalisée par une membrane 7 dont la périphérie est pincée de façon étanche entre des rebords périphériques des moitiés constitutives de l'enceinte 4. La partie centrale de cette membrane 7 est prise entre deux plateaux 8, 8'.

Chacune des deux chambres 5, 6 comporte une tubulure d'alimentation 9, 10 pour l'un des gaz ou mélange gazeux A, G. Dans cette forme d'exécution ces deux tubulures d'alimentation 9, 10 sont coaxiales.

Chacune des tubulures d'alimentations 9, 10 présente un siège de soupape 11, 12 coopérant avec une soupape 13, 14. Ces deux soupapes 13, 14 sont reliées entre elles ainsi qu'à la paroi mobile 7, 8 par une tige 15 de sorte que ces soupapes se déplacent obligatoirement conjointement.

Chaque chambre 5, 6 comporte encore une tubulure d'échappement 16, 17.

Toute différence de pressions d'alimentation entre les gaz A et G provoque dans l'équilibreur décrit le déplacement de la paroi mobile 7, 8 séparant les deux chambres 5, 6 et du même coup un déplacement des soupapes 13, 14 de telle sorte que la soupape située dans la tubulure d'alimentation du gaz sous la plus grande pression se ferme, tandis que l'autre soupape, située dans la tubulure d'admission du gaz sous la plus faible pression, s'ouvre.

Ce déplacement automatique des soupapes 13, 14 s'effectue jusqu'à ce que par le laminage du gaz au passage de la soupape la plus fermée, s'établisse l'équilibre parfait des pressions dans les chambres 5, 6 de part et d'autre de la paroi mobile 7, 8.

Les tubulures d'échappement 16, 17 de l'équilibreur délivrent les deux gaz ou mélanges gazeux A et G sous des pressions rigoureusement égales, correspondant aux pertes de charge près, à la plus faible des pressions d'alimentation.

Le second sous-ensemble II est constitué par un doseur illustré à titre d'exemple à la figure 3.

- 5 -

Ce doseur comporte deux orifices soigneusement calibrés 18, 19 alimentés séparément chacun par une des tubulures d'échappement 16, 17 de l'équilibreur. Ces orifices calibrés 18, 19 alimentent une tubulure mélangeuse commune 20 débouchant dans un conduit d'utilisation 21.

Comme les deux orifices sont alimentés par le gaz ou le mélange gazeux A et G à une pression rigoureusement égale, les débits au travers des orifices calibrés 18, 19 sont, suivant les bases bien connues de la mécanique des fluides, strictement proportionnels aux sections de passage de ces orifices. En effet, la tubulure mélangeuse 20 reliant les deux orifices, la pression en aval de ceux-ci est également identique pour ces deux orifices.

Les orifices calibrés 18, 19 peuvent être de sections égales ou différentes, fixes ou variables. Pour réaliser ces orifices à section variable on insère dans ceux-ci des obstacles tels que des papillons 22, 23, pointeaux, clapets, etc. Lors d'une variation de section consécutive à une modification de la position de ces clapets 22, 23, les sections de passage des orifices 18, 19 doivent varier proportionnellement si l'on désire garder un dosage constant. On peut également grâce à ces clapets imposer une modification du rapport des sections des orifices 18, 19 si l'on désire modifier le dosage des gaz A et G.

Dans l'exemple illustré le doseur comporte encore, pour assurer un dosage très fin lors de la fermeture des clapets 22, 23, des orifices secondaires calibrés 24, 25 placés dans des conduits 26, 27 reliant la tubulure mélangeuse 20 aux tubulures 16 respectivement 17 alimentant le doseur.

Ces orifices secondaires 24, 25 peuvent être réglés séparément par exemple au moyen de pointeaux à vis, pour permettre un ajustement rigoureux du dosage avec très faibles débits.

Dans une variante le doseur pourrait ne comporter qu'un seul orifice secondaire calibré.

L'application d'un dispositif mélangeur de gaz tel que décrit peut être prévue dans tous les systèmes utilisateurs de mélanges gazeux et dont le fonctionnement nécessite un dosage constant des deux constituants du mélange, alors même qu'on ne peut pas garantir l'invariance des pressions d'alimentation ni celle de la pression d'utilisation, et que le débit d'utilisation varie dans les plus larges proportions, soit de 0 à 100 %. Une application particulière de l'invention est l'alimentation des moteurs à combustion interne à allumage commandé d'un mélange gazeux de gaz combustible et d'air, dans lequel toute variation de composition du mélange entraîne un fonctionnement anormal ou même l'arrêt du moteur par impossibilité de combustion, soit que le mélange soit trop riche, soit qu'il soit trop pauvre. Pour cette application, on peut aisément concevoir que le débit varie d'un facteur 10 ou même plus depuis le ralenti à vide jusqu'à la pleine charge à régime maximum. On peut également concevoir que la pression d'alimentation en gaz combustible varie (fût-ce le fait des pertes de charge dans les conduits d'amenée, filtre ou autres dispositifs de contrôle généralement quelconques, fût-ce le fait de la production même du gaz) ou que la pression d'alimentation en air varie, et que ces variations ne soient pas simultanées ou proportionnelles. Dans ce cas, dans les dispositifs existants, les débits délivrés au moyen d'orifices constants tels que : gicleurs, tuyères, diaphragmes, ..., varient avec les pressions d'alimentation et celle du collecteur commun selon les lois bien connues de la mécanique des fluides, de sorte que les proportions du mélange obtenu sont tributaires de ces pressions.

Par contre tous ces inconvénients peuvent être évités par l'utilisation du dispositif selon l'invention qui pourrait dans ce cas être un carburateur à gaz.

Enfin le dispositif doseur de gaz décrit présente une très grande fiabilité ses organes mobiles étant réduits au stricte minimum, sa construction est simple et robuste, il ne comporte qu'une seule commande réglant le débit du mélange ou simultanément ce débit de mélange et le taux du mélange gazeux. Le mélangeur décrit peut délivrer des débits pulsés à fréquence élevée du fait de sa très faible inertie et de sa raideur nulle.

Il est évident que de nombreuses variantes constructives peuvent être prévues pour la réalisation de l'équilibreur et du doseur sans sortir du cadre de la protection revendiquée.

Bien entendu diverses modifications peuvent être apportées par l'homme de l'art au dispositif qui vient d'être décrit uniquement à titre d'exemple non limitatif sans sortir du cadre de l'invention.

R E V E N D I C A T I O N S

1. Dispositif mélangeur de deux gaz ou de deux mélanges gazeux en proportion désirée, caractérisé par le fait qu'il comporte un équilibreur (I) présentant deux chambres étanches (5, 6) à volume variable munies chacune d'une tubulure d'alimentation (1, 2) et d'une tubulure d'échappement (1', 2'); par le fait qu'une soupape est placée dans chacune des tubulures d'admission (1, 2) desdites chambres, le degré d'ouverture respectivement de fermeture de ces soupapes dépendant des variations de volume desdites chambres; et par le fait qu'il comporte encore un doseur (II) présentant deux orifices calibrés (18, 19) alimentés chacun par l'une des tubulures d'échappement (1', 2') de l'équilibreur (I) et débouchant dans une tubulure mélangeuse comune (3).

2. Dispositif selon la revendication 1, caractérisé par le fait que la section de passage des orifices calibrés (18, 19) du doseur (II) est fixée par construction et que le rapport entre ces sections de passage est proportionnel à la composition du mélange désiré.

3. Dispositif selon la revendication 1, caractérisé par le fait que le doseur (II) comporte des organes d'obturation (22, 23) des passages calibrés, déplaçables conjointement et en synchronisme entre une position ouverte et une position fermée sans modifier le rapport des sections des orifices calibrés (18, 19).

4. Dispositif selon la revendication 1, caractérisé par le fait que le doseur (II) comporte des organes d'obturation (22, 23) des passages calibrés, déplaçables conjointement entre une position ouverte et une position fermée en provoquant une modification du rapport des sections de passage des orifices calibrés (18, 19).

5. Dispositif selon l'une des revendications précédentes, caractérisé par le fait que le doseur (II) comporte encore au moins un conduit (21) reliant la tubulure mélangeuse commune (20) à l'une des tubulures d'échappement (16, 17) de l'équilibreur (I) et par le fait que ce conduit comporte un orifice secondaire calibré (24, 25).

6. Dispositif selon la revendication 5, caractérisé par le fait qu'il comporte des moyens de réglage de la section de passage de l'orifice secondaire calibré (24, 25).

7. Dispositif selon l'une des revendications précédentes, caractérisé par le fait que les soupapes (13, 14) de l'équilibreur (I) sont reliées mécaniquement.

8. Dispositif selon la revendication 7, caractérisé par le fait que les soupapes (13, 14) de l'équilibreur (I) sont reliées mécaniquement à la paroi mobile (7, 8).

9. Dispositif selon la revendication 8, caractérisé par le fait que les tubulures d'alimentation (1, 2) de l'équilibreur (I) sont coaxiales et que les liaisons mécaniques entre les soupapes (13, 14) et la paroi mobile (7, 8) sont rigides.

FIG.1  -1/1-

FIG.2

FIG.3